# EUROPEAN PATENT APPLICATION

(11) **EP 1 560 374 A1**
(43) Date of publication of application: **03.08.2005**
(21) Application number: 03816007.3
(22) Date of filing: 16.09.2003
(51) Int. Cl.: H04L 12/56

(54) **REAL TIME COMMUNICATION ADAPTIVE CONTROL METHOD**

(30) Priority: 13.09.2002 JP 2002269238
(71) Applicant: MATSUSHITA ELECTRIC INDUSTRIAL CO., LTD., Kadoma-shi, Osaka 571-8501 (JP)
(72) Inventor: IDO, Daiji, Yokohama-shi, Kanagawa 236-0005 (JP); HAKENBERG, Rolf, 64295 Darmstadt (DE); REY, Jose, Luis, 64287 Darmstadt (DE); GU, Xiaoyuan, 38106 Braunschweig (DE)
(74) Representative: Grünecker, Kinkeldey, Stockmair & Schwanhäusser Anwaltssozietät
(86) International application number: PCT/JP2003/011756
(87) International publication number: WO 2004/098134

(57) **Abstract**

An adaptive control method in real-time communication for taking measures against the conditions of the loss of a receiver report packet which is sent out from an apparatus at the side of receiving distributed data toward a distribution server, thereby achieving an appropriate data distribution adaptive to transmission path conditions and/or communication conditions: According to the method, a dynamic arrangement for the transmission interval of a receiver report packet is made between data distribution server (301) and data reception apparatus (101). Then, after starting the transmission/reception of real-time data, data distribution server (301) monitors the reception conditions of the receiver report packet in a unit of the arranged transmission interval, and then adaptively controls a data transmission rate, etc., based on a monitoring result.

## Description

### FIELD OF THE INVENTION

The present invention relates to an adaptive control method in real-time communication, and further relates to a method of taking measures against consecutive losses of receiver report packets, and to a dynamic determination apparatus for determining the transmission interval of receiver report packets, an adaptive control apparatus in real-time communication, and a data reception apparatus as well as a data distribution apparatus.

### BACKGROUND ART

When transmitting digital data such as image and sound (multi-media data) via a packet communication channel such as the Internet or a wireless communication network to run a streaming application, data transport is performed in accordance with such a protocol as IETF-specified (Internet Engineering Task Force) RFC 2326 or RTSP (Real Time Streaming Protocol) and the like.

Herein, RTSP is a protocol which stipulates communication procedures and control methods between a client which plays back multi-media data and a server which stores and presents the multi-media data.

That is, the setting-up and disconnecting of a session, and the requesting of media playback, is executed with RTSP. TCP/IP, which is now widely applied in Web, etc., is used for the purpose of transmitting/receiving streaming control commands using RTSP.

It is popular to adopt RTP/UDP/IP for actual media data such as sound and image.

Next, an explanation is given here on RTP/UDP protocols.

RTP/UDP are real-time transmission protocols, and they are suitably applied to the transmission of real-time data such as sound and image. As their downside, RTP/UDP do not guarantee the complete reception of data at its receiving end, which is in contrast to TCP.

Making image and sound encoded with a coding scheme such as MPEG (Moving Picture Expert Group) as a payload, a server configures an RTP packet by assigning thereto a packet generation time and a sequence number for indicating the order of packets, and sends the packet to a client.

The client extracts image data and sound data out of the payload of the RTP packet received from the server to play it back and/or store it.

When the server finishes the transmission of all multi-media data, or when the server wishes to finish communication, the server sends a notification packet for session disconnection to the client, and then disconnects the session to return to the initial state. In some occasions, due to network congestion or a bit error, packet reception may fail, or a packet may be received incorrectly. Especially, a loss of an important packet could cause a significant degradation in image quality and sound quality.

Because the sequence number in an RTP packet indicates the serial order of packet generation recorded in itself, it is possible to detect at the time of detecting any discontinuous sequence in numbers that there is some packet which has failed to be received, where such detection is made by confirming its number at each packet reception.

As described heretofore, there is a possibility of the missing of some packet in media transmission using RTP packets. In order to notify the reception conditions of a client to a server, the client transmits to the server a packet called as an RR (Receiver Report) packet or a feedback packet when it is necessary.

In the RR packet, the reception statistics information of a reception apparatus, that is, the client, is mainly described. The statistics information means jitters, etc., which indicates fluctuations in the number of RTP packet losses and in RTP packet reception time.

Meanwhile, an SR (Sender Report) packet is transmitted from the server to the client. This is used for calculating a round trip time from the SR and RR. Upon reception of the RR, the server is able to change transmission conditions in an adaptive manner in accordance with the RR statistics information.

For example, when the deterioration in transmission path conditions is reported by the RR statistics information, the server can take some measures to change its stream into one having a lower bit rate so as to prevent any further degradation in congestion conditions, or to heighten its error resistance so as to reduce the negative effect of any packet loss.

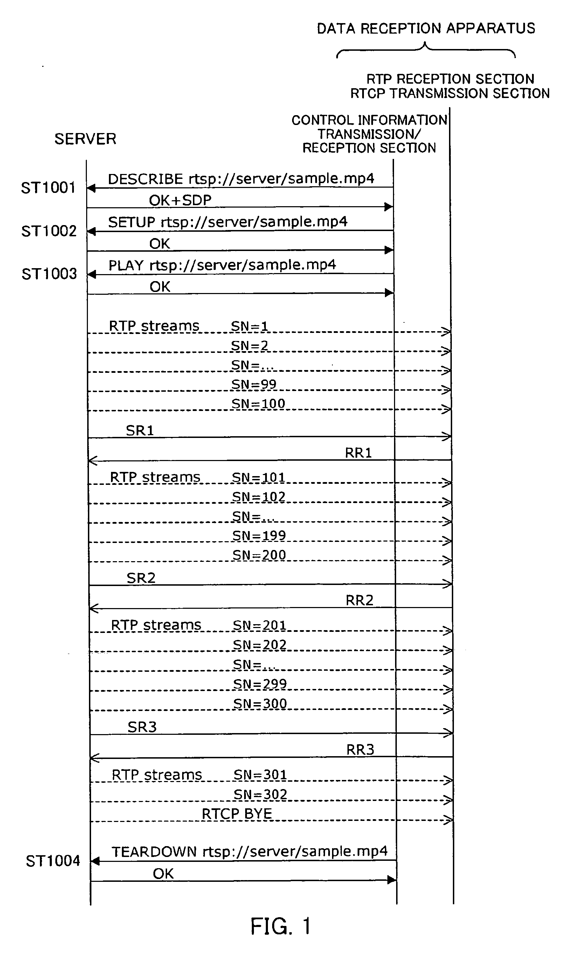

A sequence example according to a conventional streaming technique is explained here with reference to FIG. 1.

ST1001 through ST1003 represents transmission/reception of RTSP control commands before the starting of streaming.

InST1001, a servernotifies information pertaining to media to be presented (such as its bit rate, etc.) to a client.

When the reception and playback of the media is possible, the client requests a session establishment (ST1002).

After setting a session up, the client makes a request to the server for the transmission of media data (ST1003).

ST1004 is a session disconnection request, and its response. From ST1003 through ST1004, the server conducts the transmission of media data in RTP packets.

Next, an explanation is given here on RTP packets. An SN (Sequence Number) as in SN=1 is assigned to each of all RTP packets. Accordingly, a client is able to know any missing of an RTP packet or any discontinuity in sequence thereof on a network.

Starting from the SN=1 packet, a server transmits media data to the client sequentially. In parallel with such transmission, the server transmits SR packets periodically (SR1, SR2, SR3).

The client receives the media data and the SR packets, and transmits RR packets, which are packet reception statistics information, to the server periodically (RR1, RR2, RR3).

After transmitting the last packet (SN=302), the server transmits a packet called as BYE packet to notify that the transmission of all media packets is finished.

After receiving the BYE packet, the client requests to the server for TEARDOWN, which is an RTSP command, and then the session is disconnected.

Incidentally, though the initial value of SN is supposed to be assigned in random, it is explained here with an assumption that the initial value is 1 for the purpose of making the explanation simpler.

Next, an explanation is given here on operation under a situation where a transmission path having a high probability of packet losses, such as a wireless network, exists between communication ends.

As described heretofore, RTP protocol does not guarantee sure reception of a packet at its receiving end.

Accordingly, there may be some cases where an RTP packet fails to be received correctly. For example, when an RTP packet of SN=2 gets lost, the data reception apparatus is able to know that the RTP packet of SN=2 has gotten lost upon reception of a packet SN=3. Likewise, when RR1 packet is lost halfway, the server is able to know that the RR1 packet has gotten lost halfway upon reception of RR2 packet.

As described above, it is critical in multi-media data distribution to take some measures against channel congestion, and in this aspect, there are some known techniques which have a reception terminal provide a feedback on its reception conditions (congestion occurrence information) to a data distribution server in order to have it perform adaptive control such as data transmission rate change, etc., based on the feedback information (refer to Japanese Laid-Open Patent Publication No. H11-261988, and Japanese Laid-Open Patent Publication No. 2001-160824).

The techniques described in the above publications are based on the precondition that the reception condition information (this is seemed to be used for the same purpose as that of a receiver report) which is returned by the reception terminal to the data distribution server reaches the server without fail.

Therefore, there arises a problem in a situation where a reception terminal has sent out a reception condition report, but the report gets lost on its return way to a server due to congestion on a transmission path, or in another situation where the reception terminal is a handheld terminal, and the terminal moves to the outside of its communication accessible range, or where the terminal gets no longer reachable because its power is turned off; under such a condition, it is not possible to take any action at all because no information to be used as a basis for control is returned to the data distribution server.

That is, according to a conventional server apparatus or client apparatus, when an RR packet (receiver report packet) gets lost, because a server is not able to use statistics information on the lost RR packet, the server fails to take an immediate response action even when the deterioration in transmission path conditions is reported.

Moreover, when RRpackets get lost consecutively, the server is not able to make a discrimination as to whether the client has not transmitted any RR packets or RR packets has gotten lost consecutively due to degradation in transmissionpath conditions.

Therefore, even under a situation where there is an occurrence of congestion on the transmission path from the server to the client, there is a fear that the server continues to send packets, which could further aggravate the congestion.

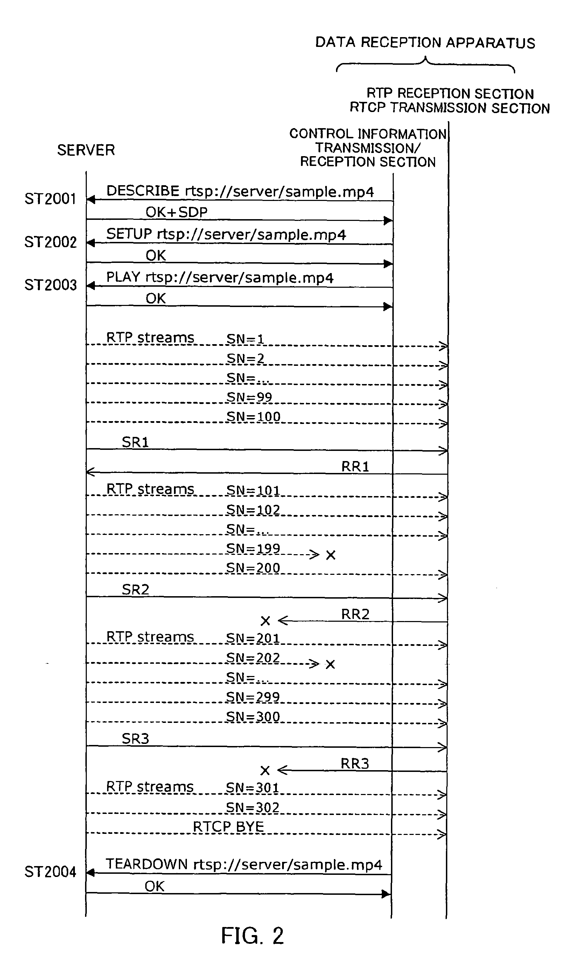

A detailed explanation is given here with reference to a sequence diagram of FIG.2.

An explanation is omitted for steps ST2001, ST2002, ST2003, and ST2004 because they are the same as those in FIG.1.

In the sequence diagram of FIG. 2, some RTP packets and RTCP packets are lost due to effects from network congestion or a transmission error in a wireless network, etc,. That is, RTP packets of SN=199 and SN=202, and RR packets of RR2 and RR3 are the lost ones.

Though the server receives RR1 correctly, it is not able to receive RR2 and RR3 at all due to their losses. In RR2 and RR3, information on the number of packets discarded due to the losses of SN=199 and SN=202 are respectively described.

If the server received RR2 and RR3 as it is supposed to do so, the server would perform processing such as the reduction of the transmission rate of RTP packets to avoid further congestion; however, the server is not able to perform such processing at all due to the losses of RR2 and RR3.

### DESCRIPTION OF THE INVENTION

The present invention has been made in view of the foregoing disadvantages, and the object of the invention is to take measures against the loss of a receiver report packet which is sent out from an apparatus at the side of receiving distributed data, thereby realizing a proper data distribution adaptive to transmission path conditions and/or communication conditions.

According to an adaptive control method in real-time communication of the present invention, an arrangement is made for arranging the transmission interval of a receiver report packet between a data transmission apparatus and a data reception apparatus before starting transmission and reception of real-time data, and the data transmission apparatus monitors the reception conditions of the receiver report packet in a unit of the arranged transmission interval after starting the transmission and reception of the real-time data, and then the data transmission apparatus adaptively controls data transmission based on a monitoring result.

That is, it determines the transmission interval of a receiver report packet dynamically by utilizing control signals at the time of session establishment and so on, and obligates the data reception apparatus to make one reception reporting without fail at the determined interval periodically (when fixed intervals are employed), or alternatively, to make a reception reporting (s) at least once within the determined interval (when tolerable maximum intervals are employed).

By this means, it becomes possible for the data transmission apparatus to monitor the conditions of the losses of receiver report packets in a unit of the interval and to estimate the transmission path conditions and/or communication conditions based on the monitoring, which makes it further possible to perform the adaptive controlling of data transmission. That is, it is possible to prevent congestion by adjusting an RTP transmission rate; and in a case where it is guessed that the session has been disconnected because the data reception apparatus has fallen into a non-accessible state for communication, it is possible to avoid unnecessary data transmission by ending RTP transmission.

Regarding arrangement of the transmission intervals of receiver report packets, it is preferable to adopt a transport scheme employing a connection-oriented protocol having a high reliability (such as TCP) in order to ensure communication.

With the present invention, it is possible to take measures against the consecutive losses of receiver report packets.

In addition, a dynamic determination apparatus for the transmission interval of a receiver report packet according to the present invention comprises a transmission interval determination section that dynamically determines the transmission interval of a receiver report packet in real-time communication, and a transmission section that transmits the determined transmission interval to an apparatus at the other end of communication using a connection-oriented transport scheme having a high reliability.

Moreover, an adaptive control apparatus in real-time communication according to the present invention comprises a monitoring section that monitors the reception conditions of the receiver report packet in a unit of a transmission interval determined by the dynamic determination apparatus for the transmission interval of the receiver report packet after starting transmission and reception of the real-time data, and an adaptive control section that controls data distribution adaptively based on a monitoring result.

By providing such a dynamic determination apparatus for the transmission interval of a receiver report packet and an adaptive control apparatus in real-time communication in a data distribution server or in a data reception terminal, or alternatively, by providing them on communication transmission path individually, it is possible to perform channel congestion control and distribution data QoS control in consideration of the possible occurrence of receiver report packet losses.

Furthermore, a data reception apparatus according to the present invention comprises a transmission interval determination section that determines the transmission interval of a receiver report packet, a control information transmission and reception section that is able to notify the determined transmission interval information to the other end of communication using a connection-oriented communication protocol, a receiver report packet generation section, and a receiver report packet transmission section that transmits a receiver report packet at least once within the transmission interval.

Still furthermore, a data distribution apparatus according to the present invention comprises a timer for measuring the elapsing of the transmission interval of a receiver report packet, which is notified by an apparatus at distribution end or is determined by the apparatus itself, a counter that counts the number of times of failed receptions of the receiver report packet within the transmission interval or within an interval of the transmission interval plus a delay time of a transmission path, and an adaptive control section in real-time communication that compares a counter value of the counter with one or more threshold, and based on a comparison result, lowers the transmission rate of the media data or disconnects session.

Because the configuration of the apparatus is simple and it is possible to realize such a configuration with just minor modifications in RTP (Real-Time Protocol), it is easy to implement the method according to the present invention.

### BRIEF DESCRIPTION OF THE DRAWINGS

FIG.1 is a sequence diagram for illustrating an example of real-time communication procedures;
FIG.2 is a sequence diagram for illustrating an example of procedures when performing media distribution on a network which is subject to congestion and/or transmission errors;
FIG. 3 is a block diagram for illustrating the configuration of a multi-media data distribution system (a real-time data communication system);
FIG.4 is a diagram for illustrating a protocol stack when performing multi-media communication (real-time communication) ;
FIG.5 is a flowchart illustrating the fundamental procedures of an adaptive control according to the present invention in a multi-media real-time communication;
FIG.6 is a block diagram illustrating an example of the configuration of a data transmission server/data reception apparatus;
FIG.7 is a sequence diagram for explaining the operation of the reception data apparatus in FIG. 6 (the specific operation which is performed when determining the transmission interval of a receiver report packet in the data reception apparatus).
FIG.8 is a flowchart for explaining the operation of the server side in FIG.6;
FIG.9 is a diagram illustrating an example of the contents of an RTSP message from a data reception apparatus to a server;
FIG. 10 is a diagram illustrating an example of the contents of an RTSP response from a server to a data reception apparatus;
FIG.11 is a block diagram illustrating another example of the configuration of a data transmission server/data reception apparatus; and
FIG. 12 is a diagram illustrating an example of the scripting of media information in compliance with SDP (stipulated in RFC2327).

### BEST MODE FOR CARRYING OUT THE INVENTION

Embodiments of the present invention will be described in detail below with reference to the accompanying drawings.

It is noted that "real-time data" as used in this specification is defined as a type of data for which real-time processing/nature is required, and this term is used herein as a synonym of media data which represents audio data and/or video data (or multi-media data).

### (Embodiment 1)

In the present embodiment, a data reception apparatus determines a fixed interval or a tolerable maximum interval with which it sends a receiver report to a server, and notifies information on the interval to the server by using a reliable transport scheme, whereas the conditions of receiver report packet loss is monitored at the server side so as to perform adaptive control on data distribution based on a monitoring result.

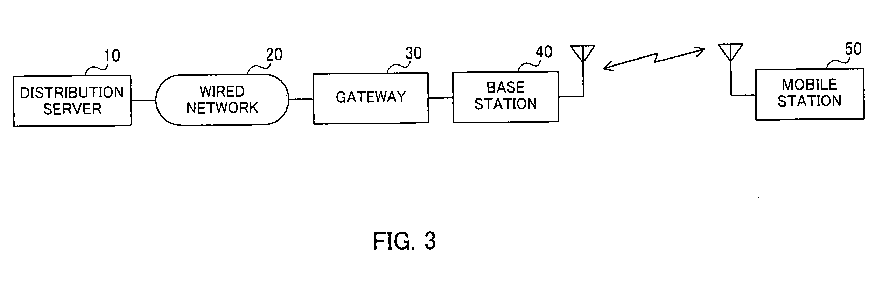

In the present embodiment, it is assumed to implement the method according to the present invention in a data distribution system having a combination of a wired communication network and a wireless communication network as illustrated in FIG.3.

As shown in FIG.3, mobile station 50 receives multi-media data (image data and/or sound data) which was distributed from distribution server 10. Multi-media data for distribution goes through wired network 20, gateway 30, and wireless base station 40 to be transmitted to mobile station 50.

As mobile station 50, a handheld device such as PDA (Personal Digital Assistant), a mobile phone, or a personal computer is conceivable. Because the conditions of wireless communication suffers significant effects from a reception environment, channel congestion tends to occur frequently, and there is a fear of degradation in the quality of reception signals due to an increase in a communication data error rate, and there is also a possibility of a channel disconnection caused by the moving of the terminal to an area where radio wave is hard to reach.

I f the transmission of data is continued without conducting any adaptive control by data distribution server 10 regardless of the occurrence of packet loss conditions where a receiver report packet sent out from mobile station 50 has been lost on its way to distribution server 10, a burden on the channel will become heavier and heavier.

Therefore, an adaptive control on data distribution by utilizing the dynamic determination of the transmission interval of a receiver report packet according to the present invention works effectively.

There is no specific limitation in a wireless communication scheme between mobile station 50 and base station 40, and it is possible to employ a variety of schemes such as a CDMA scheme or a GSM scheme. The application of the present invention is effective in a W-CDMA scheme because the real-time distribution of multi-media data is possible therein.

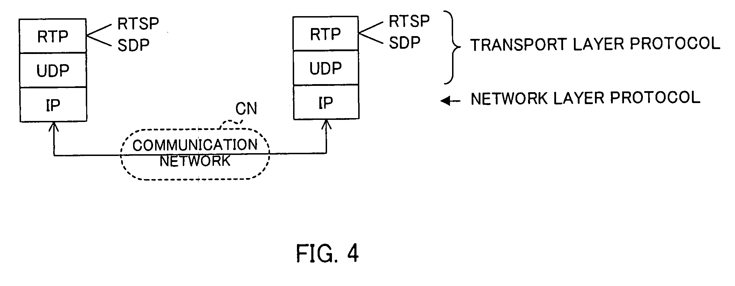

FIG.4 is a diagram for explaining the protocol stack used for transmission/reception of multi-media data.

As illustrated in the figure, RTP (Real-Time Protocol) and UDP (User Datagram Protocol) make up a set, and form a transport layer protocol. Incidentally, in order to achieve real-time multi-media communication via a communication network CN, other protocol such as RTSP, SDP is required.

IP (Internet Protocol) is adopted as a network layer protocol.

Specifically, the present invention intends to add some improvements on the RTP protocol with the aim of dealing with the conditions of a receiver report packet loss.

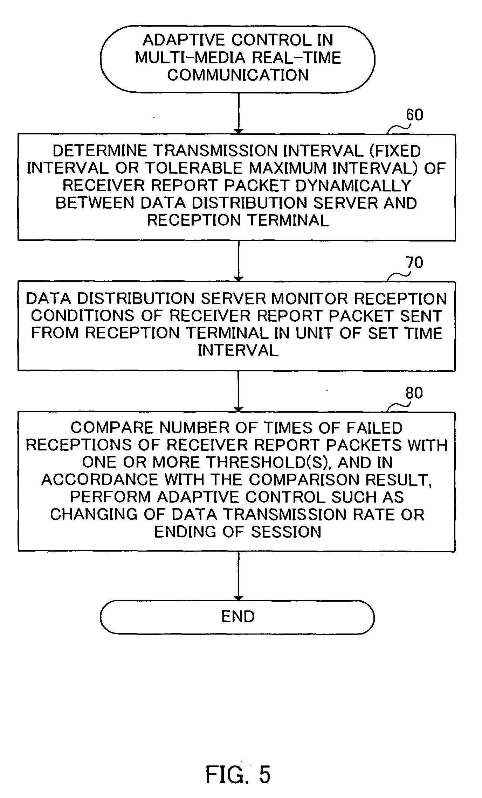

The main procedures of an adaptive control in a multi-media real-time communication according to the present invention are summarized as illustrated in FIG.5.

Specifically, the transmission interval (fixed interval or tolerable maximum interval) of a receiver report packet is dynamically determined between a data distribution server and a reception terminal (Step 60).

Next, the data distribution server monitors the reception conditions of a receiver report packet sent from the reception terminal in the unit of set time interval (Step 70).

Then, it compares the number of times of the failed receptions of receiver report packets with one or more threshold(s), and in accordance with the comparison result, it performs adaptive control such as the changing of a data transmission rate, the ending of a session, and so forth (Step 80).

Embodiments of the present invention will be described in more specific detail below with reference to the drawings.

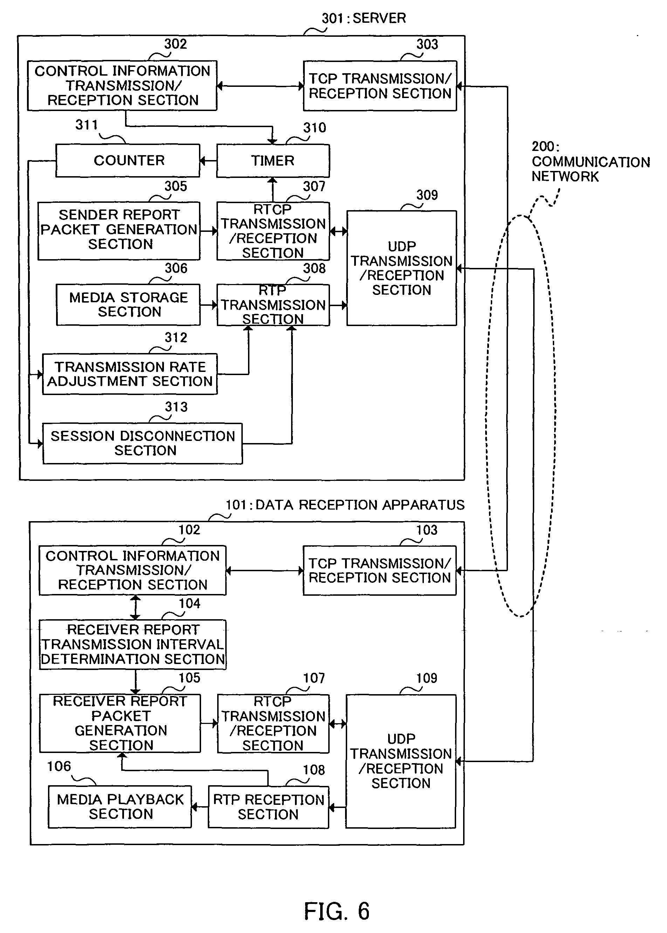

FIG.6 is a block diagram illustrating the configuration of a data distribution server/data reception apparatus which transmits/receives streaming data.

Data distribution server 301 and data reception apparatus 101 perform bi-directional communication with each other via communication network 200.

First, the configuration and the operation of data reception apparatus 101 (shown in the lower side of FIG. 4) will be explained.

Control information transmission/reception section 102 transmits/receives control information such as the setting-up, starting, stopping, etc. of streaming.

TCP transmission/reception section 103 performs transmission/reception to/from a server via a network such as the Internet, wireless network, and so on by using TCP, which is a reliable transport scheme.

UDP transmission/reception section 109 performs transmission/reception to/from a server via a network such as the Internet, wireless network, and so on by using UDP, which is a non-reliable transport scheme.

RTP reception section 108 receives media data transmitted from the server. Media playback section plays back the media data, which is audio or video, accommodated in the RTP packet received at the section 108.

Receiver report packet generation section 105 monitors the received RTP packet to measure packet losses and/or the fluctuations in reception time, and generates a receiver report packet.

RTCP transmission/reception section 107 receives a sender report packet, etc., transmitted from the server, while the section 107 transmits a receiver report packet, etc., generated at receiver report packet generation section 105 to the server.

Receiver report transmission interval determination section 104 determines a fixed transmission interval or a tolerable maximum interval with which a receiver report is sent to the server, and notifies it to the server via control information transmission/reception section 102, and at the same time, instructs the determined interval to receiver report packet generation section 105.

Here, if the fixed transmission interval for a receiver report packet is taken, data reception apparatus 101 is obliged to send out receiver report packets periodically at each of the interval.

On the other hand, if the tolerable maximum interval is taken, data reception apparatus 101 is obliged to send out a receiver report packet at least once within the interval, where it may be done at any timing within the interval.

It is arbitrary to select which one of the intervals; however, in a case where the tolerable maximum interval is used, there is an advantage of enjoying freer transmission timing for receiver report packets.

It is noted that "trr-fixed-int" is used as a parameter name for a fixed receiver report transmission interval in the following description. In addition, "trr-max-int" is used as a parameter name for a tolerable maximum receiver report transmission interval hereafter.

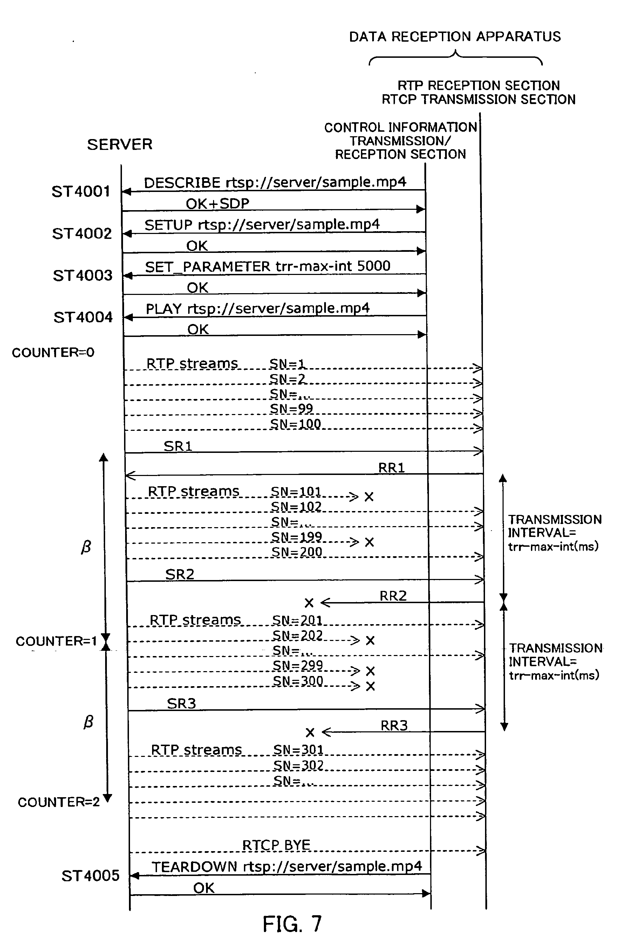

Next, the operation of data reception apparatus 101 is explained with reference to FIG.7.

FIG.7 is a sequence diagram illustrating the operation of client 101.

As in the operation of the prior art, the setting-up of a session is completed through ST4001 and ST4002. Next, the transmission interval of a receiver report packet, which is determined by the client (receiver report transmission interval), is transmitted to the server.

Specifically, a SET_PARAMETER request of an RTSP control message specifying trr-max-int, which is a parameter name of a receiver report transmission interval (here, it is assumed to use a maximum tolerable interval), is transmitted from the client to the server. As described above, it is possible to use trr-fixed-int (that is, a fixed interval) as the parameter.

In the present case, as it is specified as "trr-max-int=5000", it follows that the client notifies to the server that it will send a receiver report at least once in every 5000ms=5sec.

Next, the configuration and the operation of media data distribution server 301 (shown in the upper side of FIG. 6) will be explained.

As shown in FIG.6, control information transmission/reception section 302 transmits/receives control information such as the setting-up, starting, stopping, etc. of streaming as requested from a data reception apparatus.

TCP transmission/reception section 303 performs transmission/reception to/from a data reception apparatus via a network such as the Internet, wireless network, and so on by using TCP, which is a reliable transport scheme.

UDP transmission/reception section 309 performs transmission/reception to/from a data reception apparatus via a network such as the Internet, wireless network, and so on by using UDP, which is a non-reliable transport scheme.

RTP transmission section 308 transmits media data to a data reception apparatus.

Media storage section holds media data, which is audio or video, to be transmitted by the section 308. Sender report packet generation section 305 performs the measuring of a data round trip time between the server and the data reception apparatus, and so on, and generates a sender report packet.

RTCP transmission/reception section 307 receives a receiver report packet, etc., transmitted from the data reception apparatus, while the section 307 transmits a sender report packet, etc., generated at sender report packet generation section 305 to the data reception apparatus.

Timer 310 sets a value (β), which is the value of the receiver report transmission interval inputted from control information transmission/reception section 302 plus some considerations on jitters α, and provides its output to counter 311 if no receiver report packet has been received during β.

That is, the timer 310 also functions as a judgment section that judges whether a receiver report packet has arrived or not within a given interval.

It is noted that, not only when a maximum tolerable interval is taken but also when a fixed interval is taken, consequentially, the common approach can be taken in a point that it is enough to judge whether a receiver report packet has arrived or not in the interval, and therefore it is possible to make a judgment with the configuration illustrated in FIG. 6 regardless of which one of the intervals is used.

Counter 311 increments its counts by one when receiving an input from timer 310. When the counts amount to a certain predetermined value, an instruction for reducing transmission rate is inputted into transmission rate adjustment section 312, and the section 312 reduces the transmission rate of RTP packets accordingly.

When the value of the counter amount to a further greater predetermined value, an instruction for ending the transmission of RTP packets is inputted from the counter into session disconnection section 313, and the section 313 finishes the transmission of RTP packets to end the session accordingly.

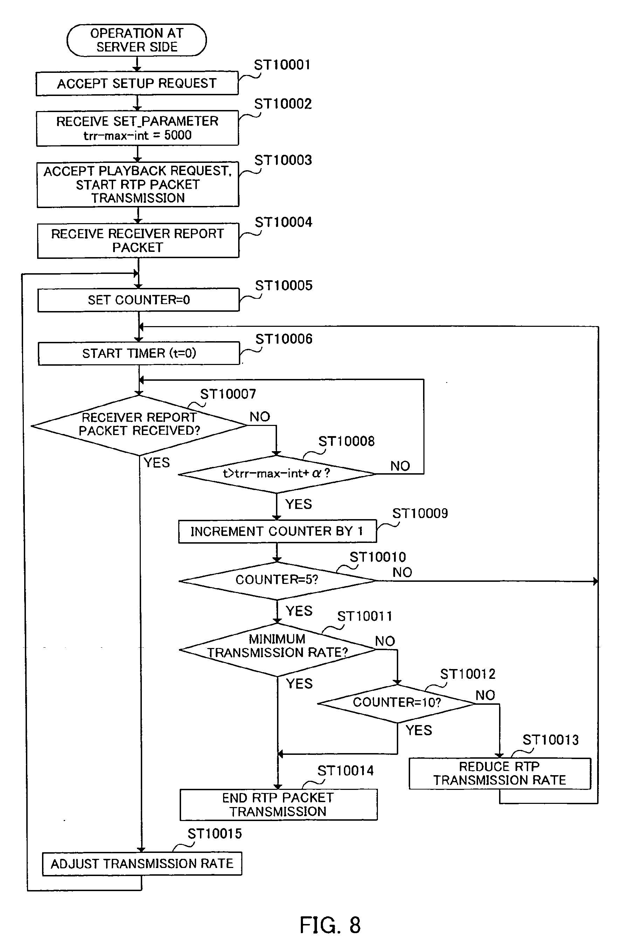

Next, the operation of media data distribution server 301 is explained with reference to FIG.8.

At step ST10001, the server accepts a SETUP request from its client, and transmits a response (OK).

Subsequently, the server receives a SET_PARAMETER request, and sets trr-max-int into a value specified from the client (5000ms) (ST10002). After accepting a PLAY request and then transmitting a response (OK), the server starts the transmission of RTP packets containing media data to the client (ST10003).

After starting the transmission of RTP packets, the server receives the first receiver report packet from the client (ST10004). The server sets its counter at 0 (ST10005).

Setting the timer at 0, the server starts its timer (ST10006) . Next, the server monitors whether a receiver report packet is received or not (ST10007), and if there is the reception of a receiver report packet, the server adjusts its transmission rate based on information contained in the receivedRRpacket (ST10015), and thereafter, the process goes back to the processing in ST10005.

If no receiver report packet is received in ST10007, it moves onto the processing in ST10008. A comparison is made between the value of the timer which is incremented by one at every 1ms, that is, the value t, and the value of trr-max-int with an addition of α, where α is a value for considerations on jitters indicating the variations in RTP packet reception time, that is, the value trr-max-int+α (ST10008).

If t is lesser, the process goes back to ST10007 to monitor the reception of any receiver report packet; and if t is greater, it is judged that the receiver report packet has been lost on its way, or that the error rate has increased or transmission has not been done, and it goes to ST10009.

At ST10009, the counter indicating the number of the failed receptions of receiver report packets is incremented by one.

Then, at ST10010, it is judged whether the counter is, for example, "5" or not. That is, it is judged whether the failed receptions of receiver report packets have reached 5 times or not. Then, if not "5", the processing returns to ST10006; and if "5", it is judged whether the current transmission rate is the minimum one or not (ST10011). Though the transmission rate is controlled stepwise, it can not be reduced less than the minimum rate if the current rate is the minimum one, and therefore, if the judgment made in ST10011 is YES, the transmission of RTP packets is ended (ST10014).

AtST10012, it is judgedwhether the counter is, for example, "10" or not. If not "10", it is judged that, though the session with the client continues to be held, a receiver report packet has been lost due to a cause of congestion, etc., and when judged so, the degradation of the congestion is prevented by reducing the transmission rate of RTP packets (ST10013).

If it is "10", it is judged that the session with the client has been disconnected unilaterally due to a cause of the turning-off of power by the client, and the transmission of RTP packets is ended (ST10014).

The workings of the counter incrementing are explained with reference to FIG.7.

An explanation for ST4001 through ST4004 is omitted here because they are the same as explained heretofore. After receiving RR1, the timer starts at the server.

As the value of the server timer, β as determined by the following equation is taken (β=the reception report transmission interval notified in advance+α).

If the server does not receive RR while a duration of β elapses, the server increments the counter by one to make the counter=1. If another duration β elapses without receiving any RR, the counter is further incremented by one, where the counter=2.

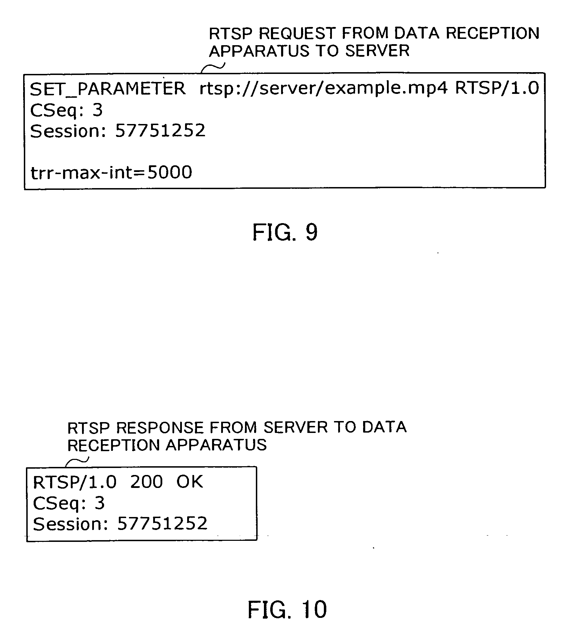

Here, an explanation is given on a message notified with SET_PARAMETER with reference to FIG.9.

The line starting with SET_PARAMETER indicates that a SET_PARAMETER request is transmitted to the URL specified with rtsp://. Cseq signifies a sequence number, which is incremented by one at each exchanging of RTSP messages in an RTSP session. Session is an identification number for identifying a certain RTSP session.

The above are an RTSP header, and a main text starts with one blank line space after it. In the text, trr-max-int=5000 is scripted, which notifies the receiver report transmission interval to the server.

Upon reception of the notice, the server returns OK as illustrated in FIG.10.

Though it is explained here with the receiver report transmission interval as a fixed value of 5000 ms in the present embodiment, the invention is not limited to such a case.

Moreover, as described above, a fixed interval may be specified which ensures the transmission of a receiver report packet once at every receiver report transmission interval, instead of specifying a maximum interval where a receiver report packet is transmitted at least once within the receiver report transmission interval.

### (Embodiment 2)

In the present embodiment, a data distribution server determines the transmission interval of a receiver report packet, and notifies information on the determined interval to a data reception apparatus by using a reliable transport scheme.

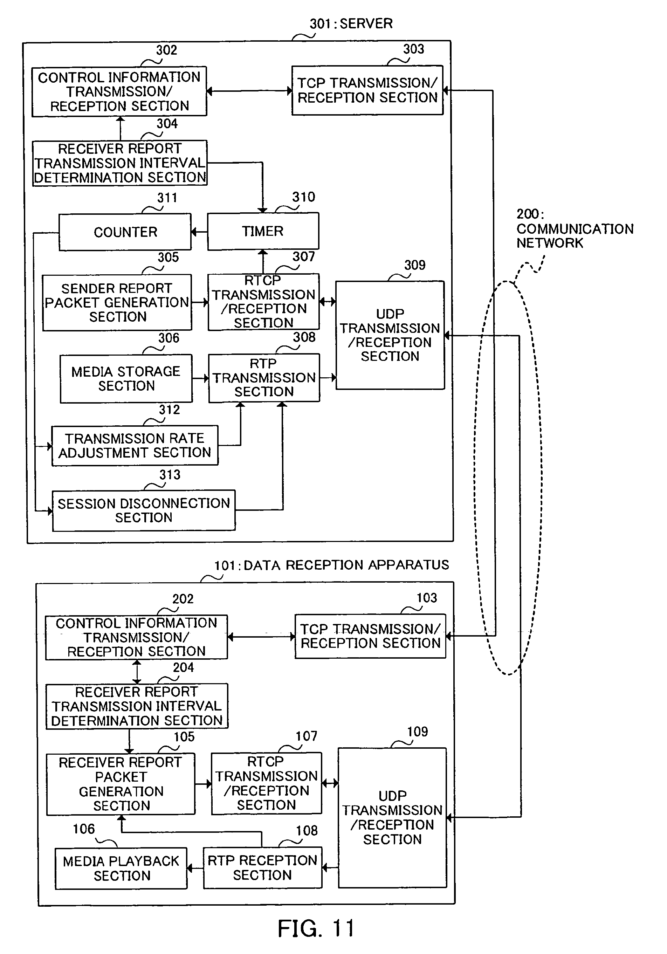

FIG.11 is a block diagram illustrating the configuration of a media data transmission server/data reception apparatus.

Basically, the configuration is the same as one in the above-described embodiment (FIG. 6), and a redundant explanation is omitted here.

That is, in data reception apparatus 101 shown in the lower side of FIG.11, the configuration is the same as one in FIG.6 except for receiver report transmission interval determination section 204, and therefore the same explanation is not given here.

Information on the receiver report transmission interval received from data distribution server 301 is inputted into receiver report transmission interval determination section 204 via control information transmission/reception section 202. Then, in accordance with the receiver report transmission interval, data reception apparatus 101 transmits a receiver report packet (it does not matter whether it is in a packet format or not as long as it is information for reporting reception conditions) to data distribution server 301.

Meanwhile, in data distribution server 301 shown in the upper side of FIG.11, receiver report transmission interval determination section 304 determines the interval with which the data reception terminal transmits a receiver report to the server.

Then, the server instructs control information transmission/reception section 302 to transmit the determined transmission interval of a receiver report packet to data reception apparatus 101, and at the same time, the server activates timer 310.

Though an example case where the transmission interval is notified by means of RTSP as a real-time communication protocol is explained in the above description, it is also possible to achieve the same effect as above with the similar configuration when SDP is employed as protocol.

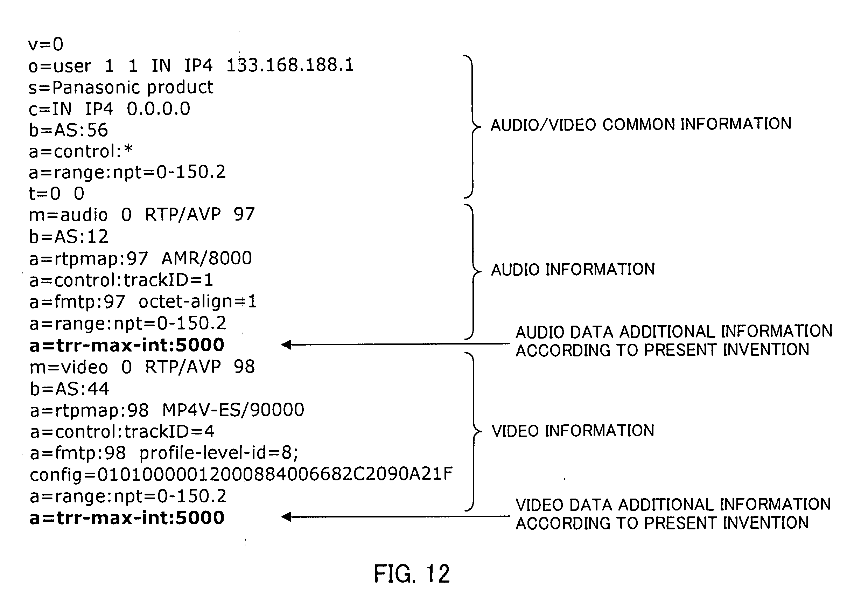

FIG.12 is a diagram illustrating an example of the scripting of media information in compliance with SDP (stipulated in RFC2327).

The addition "a=trr-max-int 5000" is assigned to each of audio and video information over the script of the prior art to be transmitted to the data reception apparatus. In this way, according to the present invention, it is basically just enough to merely add the protocol scripting, which makes its implementation easy.

It is noted that the present invention is applicable not only to a streaming application but also to such an application as packet-based voice communication and packet-based TV conference. Accordingly, it is possible to use the data distribution apparatus and the data reception apparatus of the present invention as a packet-based voice communication terminal or a packet-based TV conference terminal of SIP or H.323, and so on.

That is, the present invention is possible to be used for not only the distribution of streaming data but also for voice communication purposes, etc., such as VoIP (Voice over IP). Incidentally, SIP/H. 323 are the names of standards for realizing voice communication and TV conferencing.

As described above, according to the present invention, when transmitting/receiving audio data and/or video data via a network such as a wireless one, etc., which is subject to the occurrence of network congestion and/or transmission errors, the interval of receiver reports transmitted from a data reception apparatus is uniquely determined through a session, and the interval is transmitted to either a server or the data reception apparatus through a reliable transport scheme; and therefore, by means of the receiver report interval, it is possible for the server to end its transmission immediately when the session is disconnected, and it is further possible to prevent the degradation of congestion conditions by reducing its packet transmission rate immediately when there is degradation in the transmission path conditions.

By this means, it is possible to achieve a flexible congestion control, and to avoid a rush in channel before it occurs, and these result in the contribution to the enhancement in distribution data QoS (Quality of Service).

This specification is based on the Japanese Patent Application No. 2002-269238 filed on September 13, 2002, entire content of which is expressly incorporated by reference herein.

### INDUSTRIAL APPLICABILITY

The present invention is applicable to a system for distributing multi-media data (audio data and/or video data) for which real-time processing/nature is required.

## Claims

1. An adaptive control method in real-time communication, comprising:
a first step of making arrangement for a transmission interval of a receiver report packet to be transmitted to a data transmission apparatus by a data reception apparatus between the data transmission apparatus and the data reception apparatus before starting transmission and reception of real-time data;
a second step of the data transmission apparatus monitoring reception conditions of the receiver report packet in a unit of the arranged transmission interval after starting transmission and reception of the real-time data; and
a third step of the data transmission apparatus adaptively controlling data transmission based on a monitoring result.

2. The adaptive control method in real-time communication according to claim 1, wherein the transmission interval of the receiver report packet in the first step is a fixed interval or a tolerable maximum interval;
in the second step, based on information of number of times of failed receptions of a receiver report packet within the transmission interval or within an interval of the transmission interval plus a delay time of a transmission path, an occurrence of congestion in the communication path, an occurrence of a transmission error in the communication path, or an inability of communication with the reception apparatus is estimated; and
in the third step, a control for either data transmission rate change or data transmission stop is performed.

3. The adaptive control method in real-time communication according to claim 1, wherein a connection-oriented transport scheme having a high reliability is used for the arrangement of the transmission interval in the first step, whereas a connection-less type transport scheme is used for transmission and reception of the real-time data.

4. A method for taking measures against consecutive loss of receiver report packets in real-time communication, comprising the steps of:
either a data transmission apparatus or a data reception apparatus notifying the apparatus at other end a transmission interval of a receiver report packet to be transmitted by the data reception apparatus to the data transmission apparatus before starting transmission and reception of data by utilizing a control signal at the time of session establishment and thereby obligating the data reception apparatus to transmit a receiver report packet at least once within the transmission interval after starting transmission and reception; and
the data transmission apparatus monitoring the reception conditions of the receiver report packet sent from the data reception apparatus in a unit of an interval of the transmission interval or an interval of the transmission interval plus a delay time of a transmission path, and performing adaptive control for either data transmission rate change or data transmission stop in a case where consecutive loss of the receiver report packets arise.

5. A dynamic determination apparatus for a transmission interval of a receiver report packet, comprising:
a transmission interval determination section that dynamically determines a transmission interval of a receiver report packet in real-time communication; and
a transmission section that transmits the determined transmission interval to an apparatus at other end of communication using a connection-oriented transport scheme having a high reliability.

6. An adaptive control apparatus in real-time communication, comprising:
a monitoring section that monitors reception conditions of the receiver report packet in a unit of a transmission interval determined by the dynamic determination apparatus for the transmission interval of the receiver report packet according to claim 5 after starting transmission and reception of the real-time data; and
an adaptive control section that controls data distribution adaptively based on a monitoring result.

7. A data reception apparatus for receiving media data distributed via a communication network to replay audio and video, the apparatus comprising:
a transmission interval determination section that determines an transmission interval of a receiver report packet;
a control information transmission and reception section that notifies the determined transmission interval information to other end of communication using a connection-oriented communication protocol;
a receiver report packet generation section; and
a receiver report packet transmission section that transmits the receiver report packet at least once within the transmission interval.

8. The data reception apparatus according to claim 7, wherein the transmission interval of the receiver report packet is a fixed interval or a tolerable maximum interval.

9. The data reception apparatus according to claim 7 or 8, wherein the data reception apparatus is a mobile device having a communication function.

10. A data distribution apparatus for distributing real-time data via a communication network, comprising:
a transmission interval determination section that determines an transmission interval of a receiver report packet transmitted by an distribution end apparatus to the data distribution apparatus;
a control information transmission and reception section that is able to notify the determined transmission interval information to other end of communication using a connection-oriented communication protocol; and
a data distribution section that distributes the real-time data using a connection-less type communication protocol.

11. A data distribution apparatus for distributing real-time data via a communication network, comprising:
a timer for measuring the elapsing of a transmission interval of a receiver report packet, which is notified by an apparatus at distribution end or is determined by the apparatus itself;
a counter that counts number of times of failed receptions of the receiver report packet within the transmission interval or within an interval of the transmission interval plus a delay time of a transmission path; and
an adaptive control section in real-time communication that compares a counter value of the counter with one or more threshold, and based on a comparison result, lowers transmission rate of the real-time data or disconnects session.

12. A mobile terminal apparatus which receives media data containing either audio data or video data from a media distribution server via a wired and wireless communication network and has a playback function, the apparatus comprising:
a receiver report packet transmission interval arrangement section that transmits information related to an interval for transmitting a receiver report packet determined by itself or receives information sent from the media distribution server related to an interval at which the receiver report packet should be transmitted at a stage of establishing a session with the media distribution server; and
a receiver report packet transmission section that transmits a receiver report packet to the media distribution server in accordance with the information related to the interval.
